# EUROPÄISCHE PATENTSCHRIFT

(11) **EP 2 276 961 B1**
(45) Veröffentlichungstag und Bekanntmachung des Hinweises auf die Patenterteilung: **05.11.2014**
(21) Anmeldenummer: 09741885.9
(22) Anmeldetag: 06.05.2009
(51) Int. Cl.: F16L 59/065, E04B 1/80

(54) **VAKUUMDÄMMPLATTE SOWIE VERFAHREN ZUR HERSTELLUNG DERSELBEN**
VACUUM INSULATION BOARD AND METHOD FOR PRODUCING THE SAME
PLAQUE D'ISOLATION SOUS VIDE ET SON PROCÉDÉ DE PRODUCTION

(30) Priorität: 06.05.2008 DE 102008022380
(43) Veröffentlichungstag der Anmeldung: 26.01.2011
(73) Patentinhaber: va-Q-tec AG, 97080 Würzburg (DE)
(72) Erfinder: HIEMEYER, Jochen, 97834 Birkenfeld (DE); ROTH, Stefan, 97276 Margetshöchheim (DE)
(74) Vertreter: Küchler, Stefan
(86) Internationale Anmeldenummer: PCT/EP2009/003246
(87) Internationale Veröffentlichungsnummer: WO 2009/135666

(56) Entgegenhaltungen:
- EP-A- 0 446 486
- WO-A-2007/033836
- DE-A1- 10 058 566
- US-B1- 6 623 413

## Beschreibung

Die Erfindung richtet sich auf eine Vakuumdämmplatte, bestehend aus einem Füllstoff und einer vakuumdichten Hochbarrierefolienumhüllung mit einem als Filtermaterial gegenüber Staub dienenden, luftdurchlässigen Flächengebilde, insbesondere zum staubdichten Verschluß einer Evakuierungsöffnung, sowie auf ein Verfahren zur Herstellung einer derartigen Vakuumdämmplatte.

Evakuierte Dämmplatten bestehen aus einem druckbelastbaren, offenporigen Kern mit niedriger Wärmeleitfähigkeit und einer rundum geschlossenen Hülle aus einer Kunststoffolie, die eine hohe Barrierewirkung gegenüber Gasen und Wasserdampf aufweist. Der Kern ist auf einen Gasdruck zwischen 0,01 mbar und 5 mbar evakuiert. Dadurch wird die Wärmeleitfähigkeit des Restgases im porösen Kern auf ein Minimum reduziert. Je nach Kernmaterial kann die Wärmeleitfähigkeit im evakuierten Zustand zwischen 0,0015 und 0,010 W/mK betragen. Übliche Kernmaterialien sind Pulver, offenporige Schäume, Glasfasern oder Aerogele. Schäume, Glasfasern oder Pulver liegen meist in Plattenform vor, die auf die gewünschte Größe zugeschnitten werden, mit einer Hochbarrierefolie umhüllt und in einer Vakuumkammer luftleer gepumpt werden.

Beim Evakuieren pulverförmiger Kernmaterialien muß darauf geachtet werden, dass kein Pulverstaub aus dem zu evakuierenden Beutel in die Vakuumkammer gelangt. In der deutschen Patentschrift DE 100 58 566 wird z.B. empfohlen, eine in Plattenform gepreßte Kernplatte aus pyrogener Kieselsäure mit einem Polyestervlies zu umhüllen. Dadurch wird verhindert, dass beim Evakuieren Pulverstaub aus dem Inneren die Siegelnaht des Folienbeutels an der Auslaßöffnung verschmutzt. Ein Verschmutzen mit Pulverteilchen kann die Barrierewirkung der Siegelnaht, die nach dem Beendigen des Evakuierungsvorgangs an der Öffnung des Folienbeutels gesetzt wird, wesentlich beeinträchtigen und zur völligen Undichtheit und Belüftung der Vakuumdämmplatte führen. Nachteil dieses Verfahrens ist, dass das Polyestervlies in aufwendiger Weise auch an den Kanten der Platte den Kern eng umschließend herangefaltet werden muß. Die Siegelnaht der Hochbarrierefolie wird nämlich bevorzugt nahe an den Kanten der Kernplatte versiegelt, um keine unnötig lange, überstehende Laschen an den Seiten zu erzeugen. Wenn andererseits Teile des Umhüllungsvlieses vom Rand abweichen, besteht die Gefahr, dass das Umhüllungsvlies mit in die Naht eingesiegelt wird, wodurch im Normalfall an den betroffenen Stellen die Siegelnaht undicht wird.

Ein luftdurchlässiges Gewebe oder Vlies kann auch in einer anderen Herstellungsvariante verwendet werden. Hier wird zunächst ein Beutel aus dem luftdurchlässigen Flächenmaterial hergestellt, Pulver eingefüllt, der Beutel verschlossen und das Gebilde zu einer Platte verpreßt. Diese Platte wird dann mit einer Barrierefolie umhüllt oder in einen Beutel aus Hochbarrierefolie eingeschoben. Auch hier besteht die Gefahr, dass bei eng anliegenden Siegelnähten teilweise Vlies- oder Gewebematerial in die Siegelnaht gelangt und eine Undichtigkeit verursacht.

In einer weiteren Herstellungsvariante, die aus der DE 10 2005 045 726 bekannt ist, wird zunächst aus Hochbarrierefolie durch geeignete Zuschnitte und Verschweißungen ein Beutel gebildet, und anschließend ein Pulver, aus welchem später der Kern geformt werden soll, direkt in diesen ausgeformten Beutel aus Hochbarrierefolie eingefüllt. In die Öffnung dieses ausgeformten Beutels wird ein wannenförmiges Filtervlies eingeklebt. Dadurch wird beim Evakuieren in der Vakuumkammer das Pulver im Beutel zurückgehalten, die Foliennähte und die Kammer werden nicht verschmutzt. Es besteht auch die Möglichkeit, vor dem Befüllen des Beutels, der an zwei gegenüberliegenden Seiten geschlossen ist, die untere, dritte Seite mit einem Filtervlies zu verschließen. Die Befüllung erfolgt über die verbliebene Öffnung an der vierten Seite, die am Ende der Befüllung mit einer weiteren Siegelnaht verschlossen wird. Die Evakuierung geschieht dann über die mit dem Filtermaterial abgeschlossene Seite. Das pulverdichte Anbringen des Polyestervlieses an der Beutelinnenseite in einer Weise, dass die Pulverdichtigkeit an allen Stellen gewährleistet wird, ist allerdings in beiden Versionen relativ aufwendig. Da die Beutelform beim Einsetzen des Filtervlieses bereits vorgegeben ist, sind die an die verbliebene Beutelöffnung angrenzenden Siegelnähte der Hochbarrierefolie bereits hergestellt und das Filtervlies kann nicht versehentlich in diese Siegelnähte hinein gelangen, was zur Undichtheit der Anordnung führen würde, weil ein beliebiges, eingesiegeltes Filtervlies die Dichtheit der betreffenden Siegelnaht empfindlich stört. Aufgrund der vorhandenen Beutelform muß als Filtervlies ein hochgekantetes, wannenförmiges Gebilde verwendet werden, das zunächst in aufwendiger Weise anzufertigen ist, und welches auf der Fläche sowie an den Seiten des Hochbarrierebeutels mit dessen innenliegender Siegelschicht verklebt werden muß. Die Verklebung des Polyestervlieses mit der inneren Siegelschicht des Beutels erfolgt üblicherweise durch thermisches Verschmelzen. Dadurch entstehen allerdings keine von außen zugänglichen Siegelnähte wie beim Verschließen des Beutels, sondern nur innere Verschweißungen, die nicht als Siegelnähte im Sinne der Erfindung zu bezeichnen sind, weil sie nicht die beiden innenliegenden Siegelflächen zweier Hochbarrierefolienbereiche direkt miteinander verbunden, sondern jeweils nur einen einzigen Bereich der Hochbarrierefolie einerseits mit einem wannenförmig ausgeformten Filtervlies andererseits. Auch beim abschleißenden Versiegeln des zunächst noch luftdurchlässigen Bereichs der Beutelöffnung mittels einer letzten Siegelnaht darf kein Teil des Filtervlieses in diese Siegelnaht des Barrierebeutels gelangen, da der Beutel sonst sofort undicht würde. Eine solche Fertigung müßte daher mit einem großen Aufwand und mit größter Umsicht erfolgen, um einen erhöhten Ausschuß zu vermeiden.

Aus den Nachteilen des beschriebenen Standes der Technik resultiert das die Erfindung initiierende Problem, eine gattungsgemäße Vakuumdämmplatte derart weiterzubilden, dass eine Verschmutzung der Siegelfläche(n) während des Evakuierens durch versehentlich mitgerissen Pulver- oder Staubpartikel mit geringstmöglichem Aufwand zuverlässig vermieden werden kann.

Die Lösung dieses Problems gelingt dadurch, dass das Flächengebilde aus dem gleichen Material besteht wie die Siegelschicht der die Vakuumdämmplatte umhüllenden Hochbarrierefolie, und zwei, mehrere oder alle Siegelnähte der Hochbarrierefolie, insbesondere zweier ansonsten durch die betreffende Siegelnaht direkt aneinander gesiegelter Hochbarrierefolienbereiche, also derartiger Siegelnähte, welche bei der fertigen Vakuumdämmplatte auf ihrer ganzen Länge randseitig von außen zugänglich sind, und welche daher der Abdichtung des Vakuums innerhalb der Vakuumdämmplatte dienen und aus diesem Grund keinesfalls gestört werden dürfen, durchquert, insbesondere vollständig durchquert.

Eine solche Anordnung vereinfacht das aufwendige Befestigen des Flächengebildes ganz wesentlich, da solchenfalls eine wannenförmige Struktur des Flächengebildes zu dessen allseitiger, rundumlaufender Abdichtung nicht mehr erforderlich ist. Es genügt, wenn das Flächengebilde entlang zweier einander gegenüberliegender Kanten bzw. Randlinien festgelegt wird, während an den beiden verbleibenden Kanten die Abdichtung von den dortigen, durchquerten Siegelnähten übernommen wird. Daher muß das Flächengebilde höchstens einmal oder sogar überhaupt nicht gefaltet werden.

Überraschenderweise läßt sich aus dem Material einer Siegelschicht auch ein luftdurchlässiges Flächengebilde von ausreichender mechanischer Festigkeit herstellen, von welchem ein oder mehrere Lagen in die Siegelnaht hineinragen oder dieselbe sogar durchqueren und mit dieser verklebt werden können, ohne dass dabei Undichtigkeiten entstehen. Ein solches Flächengebilde darf und soll die Siegelnaht sogar vollständig durchqueren, ohne dass dadurch die Barrierewirkung der Umhüllung nach dem Siegeln beeinträchtigt würde. Durch den Siegelvorgang mittels Hitze und Druck verschmilzt das Flächengebilde im Gegensatz zu anderen Vliesmaterialien vollständig mit dem Material der Siegelschicht und bildet eine einheitliche und dichte Masse. Es entstehen keine Luftbläschen oder andere nachteilige Strukturen, wie sie beim Einsiegeln eines Vlieses aus einem anderen Material auftreten und Undichtigkeiten der Siegelnaht zur Folge haben.

Eine erfindungsgemäße Anordnung mit einem Flächengebilde zwischen zwei Hochbarrierefolien läßt sich dahingehend weiterbilden, dass das Flächengebilde mit der Hochbarrierefolienumhüllung so an den Rändern verklebt ist, dass die Hochbarrierefolienumhüllung mit dem Flächengebilde einen Beutel mit einer luftdurchlässigen, aber pulverdichten Öffnung bildet, und dass dieser Beutel mit einem als Dämmkern dienenden Pulver verfüllt ist, wobei das Flächengebilde die umlaufenden Siegelnähte der vakuumdichten Umhüllungsfolie durchquert und mit dem Siegelmaterial der Hochbarrierefolienumhüllungen verschmolzen ist.

Es hat sich als günstig erwiesen, dass sowohl die Siegelschichten der Hochbarrierefolien als auch das Flächengebilde aus Polyethylenvlies oder - gewebe besteht.

Es liegt im Rahmen der Erfindung, dass sowohl die Siegelschichten der Hochbarrierefolien als auch das Flächengebilde aus Polypropylenvlies oder - gewebe besteht.

Ein Verfahren zur Herstellung einer erfindungsgemäßen Vakuumdämmplatte zeichnet sich durch die Schritte aus, dass das Flächengebilde in Form eines vorzugsweise in der Mittelachse gefalteten Streifens zwischen zwei Siegelfolien eingelegt wird, thermisch mit den innen liegenden Siegelschichten der Siegelfolien so verklebt wird, dass sich eine Verbindung der beiden Siegelfolien ergibt, und schließlich die beiden Siegelfolien an den senkrecht dazu liegenden Seiten mit jeweils einer Naht versiegelt werden, wobei das streifenförmige Flächengebilde in diese Nähte mit eingesiegelt wird.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen Schnitt durch eine Hochbarrierefolienumhüllung in noch unbefülltem Zustand, etwa entsprechend einem Schnitt durch die Fig. 3 entlang der Linie I-I;
- Fig. 2: eine der Fig. 1 entsprechende Ansicht der Hochbarrierefolienumhüllung in einem Zustand unmittelbar vor dem Einfüllen des Pulvers;
- Fig. 3: eine Seitenansicht auf die Hochbarrierefolienumhüllung aus Fig. 1 und 2; sowie
- Fig. 4: eine Draufsicht auf eine Stirnseite der Fig. 3 in Richtung des Pfeils IV.

In der Zeichnung ist eine spezielle Ausführungsform einer Vakuumdämmplatte 1 dargestellt, die aus zwei Zuschnitten 2 einer vorzugsweise metallisierten Hochbarrierefolie gebildet wird. Damit diese beiden Hochbarrierefolien 2 entlang ihrer Kanten luftdicht miteinander verschweißt werden können, tragen sie auf ihren einander zugewandten Seiten je eine Siegelschicht aus Polyethylen. Die erfindungsgemäße Vakuumdämmplatte 1 soll für den Evakuierungsvorgang mittels eines luftdurchlässigen Flächengebildes 3 endseitig staubdicht, aber luftdurchlässig verschlossen werden; dieses Flächengebilde 3 wird aus dem selben Material angefertigt wie die Siegelschicht der Hochbarrierefolien 2, in diesem Fall aus Polyethylen. Es kann sich hierbei um ein Vlies oder Gewebe oder um eine sonstige, textile Struktur handeln, die eine flächige Gestalt aufweist, luftdurchlässig und gleichzeitig in ausreichendem Maße mechanisch stabil ist.

Aus einem solchen Material wird ein streifenförmiges Flächengebilde 3 ausgeschnitten, der etwas länger ist als die staubdicht zu verschließende Öffnung eines aus der Hochbarrierefolie, insbesondere aus den beiden Bögen 2 gebildeten Beutels.

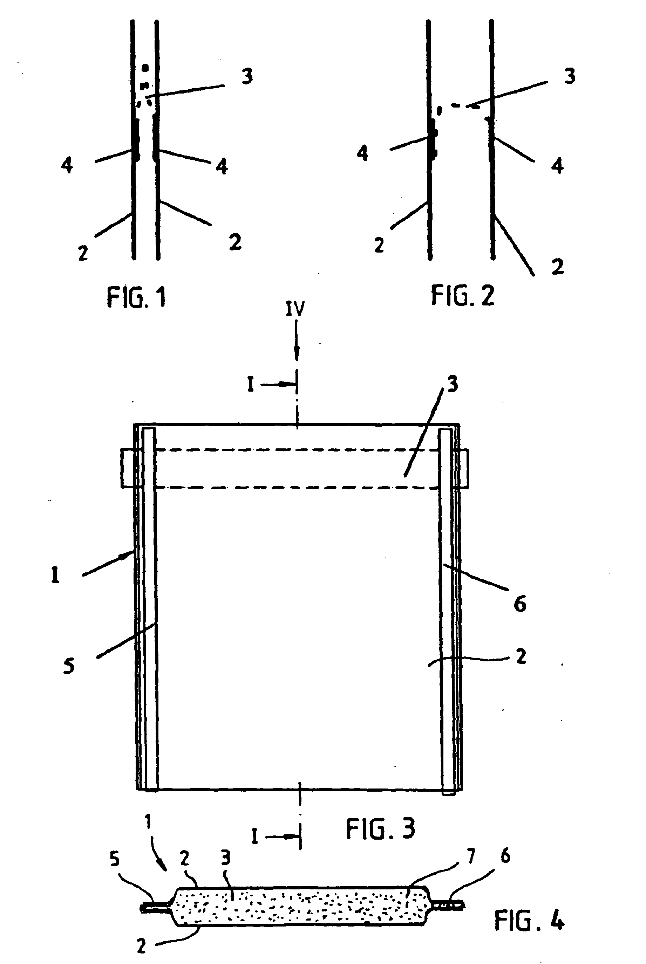

Wie Fig. 1 zeigt, wird das streifenförmig zugeschnittene Flächengebilde 3 längs einer etwa parallel zu seiner Längsachse, vorzugsweise mittig, verlaufenden Linie umgefaltet und sodann in gefaltetem Zustand zwischen die Siegelschichten der beiden Hochbarrierefolien 2 eingelegt, wobei seine Faltungslinie vorzugsweise der nahegelegenen Kante der Hochbarrierenfolien-Zuschnitte 2 zugewandt ist.

Sodann werden die beiden Streifenhälften mit je einem Teil ihrer Fläche an der jeweils benachbarten Siegelschicht festgelegt, vorzugsweise thermisch, d.h. unter Einwirkung erhöhter Temperatur, befestigt, und zwar so, dass beim Auseinanderziehen der beiden Hochbarrierefolien 2 - wie dies in Fig. 2 dargestellt ist - ein pulverdichter Abschluß entsteht. Bewährt hat sich je eine ununterbrochene, linienförmige Verklebung 4 an jeder Hälfte des streifenförmigen Flächengebildes 3.

In einem nächsten, folgenden Schritt, der in Fig. 3 dargestellt ist, werden nun die beiden Folienteile 2 entlang der beiden senkrecht zur Längsachse bzw. zur Faltungslinie des streifenförmigen Flächengebildes 3 verlaufenden Kanten mittels eines Siegelwerkzeugs thermisch unter Ausbildung je einer Siegelnaht 5, 6 verschweißt, und zwar in einem gegenseitigen Abstand, der kleiner ist als die Länge des bereits an den beiden Folien 2 festgelegten streifenförmigen Flächengebildes 3, so dass dieses Flächengebilde 3 beide Siegelnähte 5, 6 durchquert und bei deren Herstellung mit in diese eingesiegelt wird. Dadurch gibt es zwischen dem staubdichten Flächengebilde 3 und den beiden, anschließenden Siegelnähten 5, 6 keinerlei Lücke mehr, und es entsteht ein nun an drei Seiten zumindest staubdicht verschlossener Beutel aus den beiden Folienteilen 2.

Als nächstes kann nun dieser Beutel aus Hochbarrierefolie 2 von seiner vierten, noch völlig offenen Seite mit einem staubförmigen bzw. rieselfähigen Pulver 7 befüllt werden.

Ist dieses geschehen, wird auch die vierte Seite des Beutels aus Hochbarrierefolie 2 luftdicht verschlossen, vorzugsweise mittels einer Siegelvorrichtung, insbesondere unter Ausbildung einer weiteren Siegelnaht, welche bevorzugt die beiden, einander gegenüberliegenden Siegelnähte 5, 6 kreuzt und damit jegliche Lücke in diesem Bereich des Beutels schließt.

In einem nächsten Schritt wird der mit einer zur Formung des Kerns ausreichenden Menge des Pulvers 7 gefüllte Beutel aus Hochbarrierefolie 2 in die gewünschte Form gebracht, vorzugsweise in eine flache Plattenform, ggf. unter Zuhilfenahme einer Presse.

Der verschlossene Beutel aus Hochbarrierefolie 2 wird in einer Vakuumkammer platziert. Während diese Kammer evakuiert wird, kann die Luft aus dem Beutel entlang der mit dem zwar staubdichten, aber luftdurchlässigen Flächengebilde 3 verschlossenen Öffnung entweichen. Ist ein vorgegebener Grad des Vakuums erreicht, wird auch die zunächst noch luftdurchlässige Öffnung im Bereich des Flächengebildes 3 luftdicht verschlossen, vorzugsweise mittels eines Siegelwerkzeugs, insbesondere durch eine weitere Siegelnaht, die etwa parallel zu der Längsachse des streifenförmigen Flächengebildes 3 verläuft. Diese abschließende Siegelnaht verläuft zwar vorzugsweise seitlich neben dem Flächengebilde 3, insbesondere außerhalb desselben, könnte unter Umständen jedoch sogar direkt an diesem entlang oder über dieses hinweg verlaufen, da die Einsiegelung des Flächengebildes 3 im Gegensatz zu bisher verwendeten Vliesen die Dichtheit der Vakuumdämmplatte 1 nicht beeinträchtigt.

Die fertige Vakuumdämmplatte 1 bleibt daher auch nach Entnahme aus der Vakuumkammer dauerhaft vakuumdicht. Untersuchungen des Gasdruckanstieges zeigen, dass die auf diese Weise hergestellte Vakuumdämmplatte 1 trotz des Belegens eines Teils der Siegelnähte 5, 6 mit dem Flächengebilde 3 genauso vakuumdicht ist wie eine konventionell hergestellte Vakuumdämmplatte. Jedoch reduziert sich durch die Erfindung der Herstellungsaufwand für die Vakuumdämmplatte 1 ganz erheblich.

Bei einer bevorzugten Ausführungsform verfügt die fertiggestellte Vakuumdämmplatte 1 über vier Siegelnähte 5, 6, welche vorzugsweise allesamt entlang von Stirnseiten der Vakuumdämmplatte 1 verlaufen und sich in den Eckbereichen jeweils kreuzen.

Weiterhin besteht (-en) die dem vakuumdichten Abschluß dienende(n) Hochbarrierefolie(n) 2 bevorzugt aus einem weichen, flexiblen, ungeformten Material, so dass sich vor dem Formgebungsschritt mittels einer Presse od. dgl. ein unförmiger Beutel ausbilden kann, mit einer großen Öffnung, die das Befüllen stark erleichtert. Insbesondere besteht (-en) die (beide) Hochbarrierefolie(n) 2 aus einem flächigen Material, welches sich zwanglos und ohne Streß vollständig in eine ebene Fläche bringen läßt.

Eine weitere Besonderheit ist, dass die linienförmigen Verbindungen 4 zwischen dem Flächengebilde 3 und je einer Siegelschicht einer Hochbarrierefolie 2 jede der beiden angrenzenden Siegelnähte 5, 6, welche die beiden Bögen 2 der Hochbarrierefolie im Allgemeinen direkt miteinander verbinden, durchqueren, insbesondere unter einem Winkel von 45° oder mehr, insbesondere unter etwa rechten Winkeln.

Im Rahmen der Erfindung ist es auch möglich, anstelle den Kern durch Einfüllen eines pulverförmigen Materials herzustellen, einen gepreßten Pulverkern zu verwenden und diesen mit einem Flächengebilde 3 aus dem selben Material wie die Siegelschicht an den Innenseiten der Hochbarrierefolie(n) zu umhüllen, welcher in diesem Fall keine Streifenform aufweisen müßte, sondern auch eine eher flächige Form haben könnte. In diesem Fall braucht keine Vorkehrung getroffen zu werden, dass das Flächengebilde 3 stets eng an dem Kern anliegt, weil es schlimmstenfalls bedenkenlos in etwaige Schweißnähte mit eingesiegelt würde, ohne dass dieselben dadurch undicht würden.

### Bezugszeichenliste

- 1: Vakuumdämmplatte
- 2: Barrierefolie
- 3: Flächengebilde
- 4: Klebeschicht
- 5: Siegelnaht
- 6: Siegelnaht
- 7: Pulver

## Patentansprüche

1. Vakuumdämmplatte (1), bestehend aus einem Füllstoff und einer vakuumdichten Hochbarrierefolienumhüllung (1,2) mit einem als Filtermaterial gegenüber Staub dienenden, luftdurchlässigen Flächengebilde (3), insbesondere zum staubdichten Verschluß einer Evakuierungsöffnung, **dadurch gekennzeichnet, dass** das Flächengebilde (3)
a) aus dem gleichen Material besteht wie die Siegelschicht der die Vakuumdämmplatte (1) umhüllenden Hochbarrierefolie (1,2), und
b) zwei, mehrere oder alle Siegelnähte (5,6) der Hochbarrierefolie (2) durchquert.

2. Vakuumdämmplatte (1) nach Anspruch 1, **dadurch gekennzeichnet, dass** das Flächengebilde (3) wenigstens zwei am Rand der Vakuumdämmplatte (1) zu deren Abdichtung entlanglaufende Siegelnähte (5,6) der vakuumdichten Umhüllungsolie (1,2) durchquert und mit dem Siegelmaterial der Hochbarrierefolienumhüllung(en) (2) verschmolzen ist.

3. Vakuumdämmplatte (1) nach Anspruch 2, **dadurch gekennzeichnet, dass** das Flächengebilde (3) wenigstens zwei am Rand der Vakuumdämmplatte (1) zu deren Abdichtung entlanglaufende Siegelnähte (5,6) der vakuumdichten Umhüllungsolie (1,2) durchquert und mit dem Siegelmaterial der Hochbarrierefolienumhüllung(en) (2) verschmolzen ist, welche Siegelnähte (5,6) an einander geggenüberliegenden, vorzugsweise zueinander parallelen Randkanten bzw. Stirnseiten der Vakuumdämmplatte (1) entlanglaufen.

4. Vakuumdämmplatte (1) mit einem Flächengebilde (3) zwischen zwei Hochbarrierefolien (2) nach einem der vorhergehenden Ansprüche, **dadurch gekennzeichnet, dass** das Flächengebilde (3) mit der Hochbarrierefolienumhüllung (2) entlang zweier oder mehrerer seiner Kanten derart verklebt oder verbunden ist, vorzugsweise entlang von linienförmigen Verbindungen (4), dass wenigstens eine Hochbarrierefolienumhüllung (2) zusammen mit dem Flächengebilde (3) einen Beutel mit einer luftdurchlässigen, aber pulverdichten Öffnung bildet.

5. Vakuumdämmplatte (1) nach Anspruch 4, **dadurch gekennzeichnet, dass** das Flächengebilde (3) mit der Hochbarrierefolienumhüllung (2) entlang von wenigstens zwei linienförmigen Verbindungen (4) verbunden ist, welche etwa parallel zueinander verlaufen.

6. Vakuumdämmplatte (1) nach einem der Ansprüche 5 oder 6, **dadurch gekennzeichnet, dass** die linienförmigen Verbindungen (4) zwischen dem Flächengebilde (3) und je einer Siegelschicht einer Hochbarrierefolie (2) jede der beiden angrenzenden Siegelnähte (5,6), welche die beiden Bögen bzw. Grundflächen der Hochbarrierefolie (2) im Allgemeinen direkt miteinander verbinden, durchqueren, insbesondere unter je einem Winkel von 45° oder mehr, insbesondere unter etwa rechten Winkeln.

7. Vakuumdämmplatte (1) nach einem der vorhergehenden Ansprüche, **dadurch gekennzeichnet, dass** ein aus Hochbarrierefolie (2) und Flächengebilde (3) gebildeter Beutel mit einem als Dämmkern dienenden Pulver (7) verfüllt ist.

8. Vakuumdämmplatte (1) nach einem der vorhergehenden Ansprüche, **dadurch gekennzeichnet, dass** sowohl die Siegelschichten der Hochbarrierefolien (1,2) als auch das Flächengebilde (3) aus Polyethylenvlies oder -gewebe bestehen.

9. Vakuumdämmplatte (1) nach einem der Ansprüche 1 bis 7, **dadurch gekennzeichnet, dass** sowohl die Siegelschichten der Hochbarrierefolie(n) (2) als auch das Flächengebilde (3) aus Polypropylenvlies oder -gewebe bestehen.

10. Verfahren zur Herstellung einer Vakuumdämmplatte (1) mit einem Flächengebilde nach einem oder mehreren der vorhergehenden Ansprüche, **dadurch gekennzeichnet, dass** das Flächengebilde (3) in Form eines vorzugsweise entlang seiner mittigen Längsachse gefalteten Streifens aus einem staubdichten, aber luftdurchlässigen Materials zwischen zwei aneinander siegelbaren Hochbarrierefolien (2) eingelegt wird, thermisch mit den innen liegenden Siegelschichten der aneinander siegelbaren Hochbarrierefolien (2) so verbunden, insbesondere verklebt, wird (Verbindungslinien 4), dass sich über das Flächengebilde (3) eine Verbindung zwischen den beiden aneinander siegelbaren Hochbarrierefolien (2) ergibt, und schließlich die beiden siegelbaren Hochbarrierefolien (2) entlang ihrer etwa senkrecht zu der Längsachse des streifenförmigenflächengebildes (3) verlaufenden Randkanten bzw. Seiten mit jeweils einer Siegelnaht (5,6) aneinander gesiegelt werden, wobei das streifenförmige Flächengebilde (3) in diese Siegelnähte (5,6) mit eingesiegelt wird.

## Claims

1. A vacuum insulated panel (1) comprised of a filler and a vacuum-tight high-barrier film envelope (1, 2) with an air-permeable sheet element (3) that serves as a filter material for dust, particularly for the dust-tight sealing of an evacuation opening, **characterized in that** said sheet element (3)
(a) consists of the same material as the sealing layer of the high-barrier film (1, 2) enveloping said vacuum insulated panel (1), and
(b) passes through two, a plurality or all of the sealing seams (5, 6) of said high-barrier film (2).

2. The vacuum insulated panel (1) as in claim 1, **characterized in that** said sheet element (3) passes through at least two sealing seams (5, 6) of said vacuum-tight film (1, 2) which extend along the margin of said vacuum insulated panel (1) to seal the latter, and is fused together with the sealing material of said high-barrier film envelope(s) (2).

3. The vacuum insulated panel (1) as in claim 2, **characterized in that** said sheet element (3) passes through at least two sealing seams (5, 6) of said vacuum-tight film (1, 2) which extend along the margin of said vacuum insulated panel (1) to seal the latter, and is fused together with the sealing material of said high-barrier film envelope(s) (2), which sealing seams (5, 6) extend along oppositely disposed, preferably mutually parallel boundary edges or end faces of said vacuum insulated panel (1).

4. The vacuum insulated panel (1) having a sheet element (3) between two high-barrier films (2) as in one of the preceding claims, **characterized in that** said sheet element (3) is glued or joined along two or more of its edges, preferably along linear joints (4), to said high-barrier film envelope (2), such that at least one high-barrier film envelope (2), together with said sheet element (3), forms a pouch having an air-permeable but powder-tight opening.

5. The vacuum insulated panel (1) as in claim 4, **characterized in that** said sheet element (3) is joined to said high-barrier film envelope (2) along at least two linear joints (4) extending approximately parallel to each other.

6. The vacuum insulated panel (1) as in either of claims 5 and 6, **characterized in that** each of said linear joints (4) between said sheet element (3) and the sealing layer of a respective high-barrier film (2) intersects, particularly at a respective angle of 45° or more, particularly at approximately right angles, with a respective one of the two adjacent said sealing seams (5, 6) joining the two sheets or bases of high-barrier film (2) directly to each other.

7. The vacuum insulated panel (1) as in one of the preceding claims, **characterized in that** a pouch formed of said high-barrier film (2) and said sheet element (3) is filled with a powder (7) serving as an insulating core.

8. The vacuum insulated panel (1) as in one of the preceding claims, **characterized in that** both the sealing layers of said high-barrier film (1, 2) and said sheet element (3) consist of non-woven or woven polyethylene fabric.

9. The vacuum insulated panel (1) as in one of claims 1 to 7, **characterized in that** both the sealing layers of said high-barrier film(s) (2) and said sheet element (3) consist of non-woven or woven polypropylene fabric.

10. A method for producing a vacuum insulated panel (1) having a sheet element as in one or more of the preceding claims, **characterized in that** said sheet element (3), in the form of a strip made of a dust-tight but air-permeable material, preferably folded along its central longitudinal axis, is placed between two high-barrier films (2) sealable to each other, is thermally bonded, particularly glued (joint lines 4), to the inwardly disposed sealing layers of said high-barrier films (2) sealable to each other, in such a way that by means of said sheet element (3) a joint is formed between said high-barrier films (2) sealable to each other, and, finally, the two sealable high-barrier films (2) are sealed to each other by means of a respective sealing seam (5, 6) along each of their boundary edges or sides extending approximately perpendicular to the longitudinal axis of the strip-shaped sheet element (3), said strip-shaped sheet element (3) being co-sealed into said sealing seams (5, 6).

## Revendications

1. Plaque d'isolation sous vide (1) comprenant une charge et un recouvrement (1, 2) à film barrière hautement étanche au vide, comportant une structure plane (3) perméable à l'air, agissant comme matériau filtrant pour la poussière, en particulier comme obturation étanche aux poussières d'un orifice d'évacuation, **caractérisée en ce que** la structure plane (3)
a) comprend le même matériau que la couche de scellement du film à effet barrière élevé (1, 2) entourant la plaque d'isolation sous vide (1), et
b) traverse deux, plusieurs ou tous les cordons de scellement (5, 6) du film à effet barrière élevé (2).

2. Plaque d'isolation sous vide (1) selon la revendication 1, **caractérisée en ce que** la structure plane (3) traverse au moins deux cordons de scellement (5, 6) du film de recouvrement (1, 2) étanche au vide se situant le long du bord de la plaque d'isolation sous vide (1) pour son étanchéification, et est fondue avec le matériau de scellement du (des) recouvrement(s) (2) à film à effet barrière élevé.

3. Plaque d'isolation sous vide (1) selon la revendication 2, **caractérisée en ce que** la structure plane (3) traverse au moins deux cordons de scellement (5, 6) du film de recouvrement (1, 2) étanche au vide se situant le long du bord de la plaque d'isolation sous vide (1) pour son étanchéification, et est fondue avec le matériau de scellement du (des) recouvrement(s) (2) à film à effet barrière élevé ; lesdits cordons de scellement (5, 6) se situent le long des bords ou des parties frontales de la plaque d'isolation sous vide (1) opposés l'un par rapport à l'autre, de préférence parallèles l'un par rapport à l'autre.

4. Plaque d'isolation sous vide (1) avec une structure plane (3) entre deux films à effet barrière élevé (2) selon l'une des revendications précédentes, **caractérisée en ce que** la structure plane (3) est collée ou reliée avec le recouvrement à film à effet barrière élevé (2) le long de deux ou de plusieurs de ses bords, de préférence le long de jonctions (4) en forme de ligne, de manière à ce qu' au moins un recouvrement à film à effet barrière élevé (2) forme avec la structure plane (3) une poche avec une ouverture perméable à l'air, mais étanche à la poudre.

5. Plaque d'isolation sous vide (1) selon la revendication 4, **caractérisée en ce que** la structure plane (3) est reliée au recouvrement à film à effet barrière élevé (2) le long d'au moins deux jonctions (4) en forme de ligne qui sont approximativement parallèles l'une par rapport à l'autre.

6. Plaque d'isolation sous vide (1) selon l'une des revendications 5 ou 6, **caractérisée en ce que** les jonctions (4) en forme de ligne entre la structure plane (3) et respectivement une couche de scellement d'un film à effet barrière élevé (2) traversent, en particulier respectivement à un angle égal ou supérieur à 45°, en particulier à des angles approximativement droits, chacun des deux cordons de scellement (5, 6) adjacents qui relient en général directement les deux courbes ou surfaces de base du film à effet barrière élevé (2).

7. Plaque d'isolation sous vide (1) selon l'une des revendications précédentes, **caractérisée en ce qu'**une poche formée à partir d'un film à effet barrière élevé (2) et d'une structure plane (3) est remplie avec une poudre (7) agissant comme noyau d'isolation.

8. Plaque d'isolation sous vide (1) selon l'une des revendications précédentes, **caractérisée en ce qu'**à la fois les couches de scellement des films à effet barrière élevé (1, 2) et la structure plane (3) consistent en un voile ou toile de polyéthylène.

9. Plaque d'isolation sous vide (1) selon l'une des revendications 1 à 7, **caractérisée en ce qu'**à la fois les couches de scellement du (des) film(s) à effet barrière élevé (2) et la structure plane (3) consistent en un voile ou toile de polypropylène.

10. Procédé pour la fabrication d'une plaque d'isolation sous vide (1) comportant une structure plane selon l'une ou plusieurs des revendications précédentes, **caractérisé en ce que** la structure plane (3) est introduite sous forme d'une bande, en un matériau étanche aux poussières mais perméable à l'air, de préférence pliée le long de son axe longitudinal central, entre deux films à effet barrière élevé (2) pouvant être scellés l'un à l'autre, est thermiquement reliée, en particulier collée (lignes de jonction 4), avec les couches de scellement intérieures des films à effet barrière élevé (2) pouvant être scellés l'un à l'autre de manière à obtenir au-dessus de la structure plane (3) une jonction entre les deux films à effet barrière élevé (2) pouvant être scellés l'un à l'autre, et **en ce qu'**enfin les deux films à effet barrière élevé (2) pouvant être scellés sont scellés l'un à l'autre le long de leurs bords ou côtés approximativement perpendiculaires à l'axe longitudinal de la structure plane en forme de bande (3) avec respectivement un cordon de scellement (5, 6), et **en ce que** la structure plane en forme de bande (3) est scellée dans ces cordons de scellement (5, 6).
